# EUROPÄISCHE PATENTSCHRIFT

(11) **EP 1 959 132 B1**
(45) Veröffentlichungstag und Bekanntmachung des Hinweises auf die Patenterteilung: **26.02.2014**
(21) Anmeldenummer: 07021231.1
(22) Anmeldetag: 31.10.2007
(51) Int. Cl.: F03D 7/02, F03D 11/00, F03D 11/04, F03D 1/06

(54) **Windenergieanlage mit einer Pitchdrehverbindung**
Wind farm with a pitch-rotating connection
Éolienne dotée d'une liaison rotative de pitch

(30) Priorität: 14.02.2007 DE 102007008166
(43) Veröffentlichungstag der Anmeldung: 20.08.2008
(73) Patentinhaber: Nordex Energy GmbH, 22419 Hamburg (DE)
(72) Erfinder: Kirchner, Jens, 18258 Vorbeck (DE); Göpfert, Ulf, 18057 Rostock (DE); Koop, Karsten, 18057 Rostock (DE)
(74) Vertreter: Hauck Patent- und Rechtsanwälte

(56) Entgegenhaltungen:
- EP-A1- 1 933 027
- WO-A1-03/064854
- DE-B3-102004 023 773
- DE-U1-202004 003 521
- DE-U1-202005 007 450

## Beschreibung

Die vorliegende Erfindung betrifft eine Windenergieanlage mit einem Rotornabengehäuse, das eine Pitchdrehverbindung aufweist.

Bei der Pitchdrehverbindung, auch als Pitchlager bezeichnet, handelt es sich um ein Wälzlager mit einem inneren und äußeren Ring, wobei einer der Ringe mit dem Rotomabengehäuse und der andere Ring mit dem Rotorblatt verbunden ist. Über ein Pitchsystem, das bevorzugt aus einem Pitchantrieb, einer Pitchsteuerung und beispielsweise einer Hilfsstromversorgung besteht, wird das Rotorblatt um seine Längsachse gedreht und so dessen Anstellwinkel zum Wind eingestellt.

Bekannte Konstruktionen für das Rotomabengehäuse bestehen aus einem Gußkörper mit einem Flansch zur Montage der Pitchdrehverbindung. Erich Hau beschreibt in Windkraftanlagen, Grundlagen, Technik, Einsatz, Wirtschaftlichkeit, 3. Auflage, Springer-Verlag Berlin in Kapitel 7.5, daß die Qualität und das Gewicht der Rotorblätter nebst der eigentlichen Rotorblattbauweise wesentlich durch die Konstruktion des Blattanschlusses zur Rotornabe bestimmt werde.

Aus DE 10 2004 023 773 B3 ist bekannt, die Pitchdrehverbindung mit einem Innenring auszubilden, der fest mit der Rotornabe verbunden ist. Der mit dem Rotorblatt verbundene Außenring besitzt eine Außenverzahnung, die zum Verstellen des Rotorblatts kämmend im Eingriff mit einem Antriebsritzel des Pitchsystems steht.

Aus DE 10 2004 017 323 A1 ist ein Blattanschluß für ein Rotorblatt bekannt, bei dem eine Arretiereinrichtung vorgesehen ist, die das Rotorblatt mit einer vorgegebenen Winkelstellung spielfrei hält.

Aus WO 2004/090326 A1 ist ein Rotornabenkörper bekannt, der eine einstückig ausgeformte, dreiarmige Versteifung im Bereich des Rotorblattanschlusses besitzt.

Aus DE 20 2004 003 521 U1 ist ein Rotornabenkörper für eine Windenergieanlage bekannt, der mit Ringflanschen zur Befestigung einer Pitchdrehverbindung ausgebildet ist. Innerhalb der Ringflansche ist jeweils ein Aussteifungsschott vorgesehen, das entweder als einstückiges Gußteil mit dem Rotornabengehäuse ausgebildet oder als eigenständiges Bauteil mit der Rotornabe verschweiß- oder verschraubbar ist. Das Aussteifungsschott ist in dem Rotornabengehäuse an einer der Rotorwelle zugewandten Seite angeordnet.

Aus DE 20 2005 007 450 U1 ist ein Adapter zum Befestigen von Rotorblättern einer Windkraftanlage an einer Rotornabe bekannt. Der Adapter besitzt eine topförmige Gestalt mit zylindrischen oder konischen Außenwänden, die über einen nach innen vorstehenden Versteifungsflansch stabilisiert werden.

Der Erfindung liegt die Aufgabe zugrunde, mit möglichst einfachen Mitteln ungleiche Kräfte an der Pitchdrehverbindung zu vermeiden.

Erfindungsgemäß wird die Aufgabe durch eine Windenergieanlage mit den Merkmalen aus Anspruch 1 gelöst. Vorteilhafte Ausgestaltungen bilden den Gegenstand der Unteransprüche.

Die erfindungsgemäße Windenergieanlage besitzt ein Rotomabengehäuse, an dem über Verbindungsmittel mindestens eine Pitchdrehverbindung anbringbar ist. Ein Rotorblatt ist mit seiner Blattwurzel an der Pitchdrehverbindung befestigt, bevorzugt mit dieser verschraubt. Ein zusätzliches Versteifungselement rotorblattseitig zwischen der Pitchdrehverbindung und der Rotorblattwurzel ist vorgesehen. Die Pitchdrehverbindung ist bevorzugt als Wälzlager mit einem Innenring und einem Außenring ausgebildet, wobei beispielsweise der Außenring an der Rotornabe befestigt und der Innenring mit dem Rotorblatt und dem rotorblattseitigen Versteifungselement verbunden ist. Die Pitchdrehverbindung erfährt für beide Ringe eine annähernd gleiche Steifigkeit. Hierdurch wird vermieden, daß an Innenring und Außenring ungleiche Kräfte angreifen, die die Pitchdrehverbindung ungünstig belasten.

Erfindungsgemäß ist ein Versteifungselement vorgesehen, das zwischen der Pitchdrehverbindung und dem Rotornabengehäuse angeordnet und über Verbindungsmittel an diesem befestigt ist. Das erfindungsgemäße Versteifungselement ist als separates Bauteil ausgebildet und besitzt den besonderen Vorteil, daß es gemeinsam mit der Pitchdrehverbindung an dem Rotornabengehäuse montiert werden kann. Die Montage erfolgt hierbei vorzugsweise über dieselben Verbindungsmittel, mit denen die Pitchdrehverbindung an dem Rotornabengehäuse befestigt ist, wobei das Versteifungselement gemeinsam mit der Pitchdrehverbindung bevorzugt an das Rotornabengehäuse geschraubt wird.

Zweckmäßigerweise besitzt das Versteifungselement kreisförmig angeordnete Durchgangsbohrungen, die zur Aufnahme von Schrauben vorgesehen sind.

In einer bevorzugten Ausgestaltung dient das Versteifungselement zugleich als Trägerelement für Komponenten des Pitchsystems. Die Komponenten können unabhängig auf das Versteifungselement montiert werden. Auch kann vor einer Montage an das Rotornabengehäuse das Versteifungselement unabhängig getestet und geprüft werden.

Bevorzugt ist das Versteifungselement in Form eines Rings ausgebildet. Auch kann es in Form einer Scheibe, Platte oder Wanne ausgebildet sein, wobei dann ein oder mehrere Durchbrüche in dem Versteifungselement vorgesehen werden können.

In einer bevorzugten Ausgestaltung sind Pitchdrehverbindung und Rotorblatt im Bereich der Blattwurzel einerseits und Rotornabengehäuse sowie Versteifüngs-element andererseits derart gestaltet, daß ihre Steifigkeiten einander entsprechen. Ein bevorzugtes Ausführungsbeispiel wird nachfolgend anhand der Zeichnung näher erläutert.

Es zeigt:
- Fig. 1: das erfindungsgemäße Versteifungselement, das als Wanne ausgeführt ist,
- Fig. 2: die Montage des erfindungsgemäßen Versteifungselements an dem Rotornabengehäuse und
- Fig.3: das erfindungsgemäße Versteifungselement mit Komponenten des Pitchsystems, der Pitchdrehverbindung und einem rotorblattseitigen zweiten Versteifungselement.

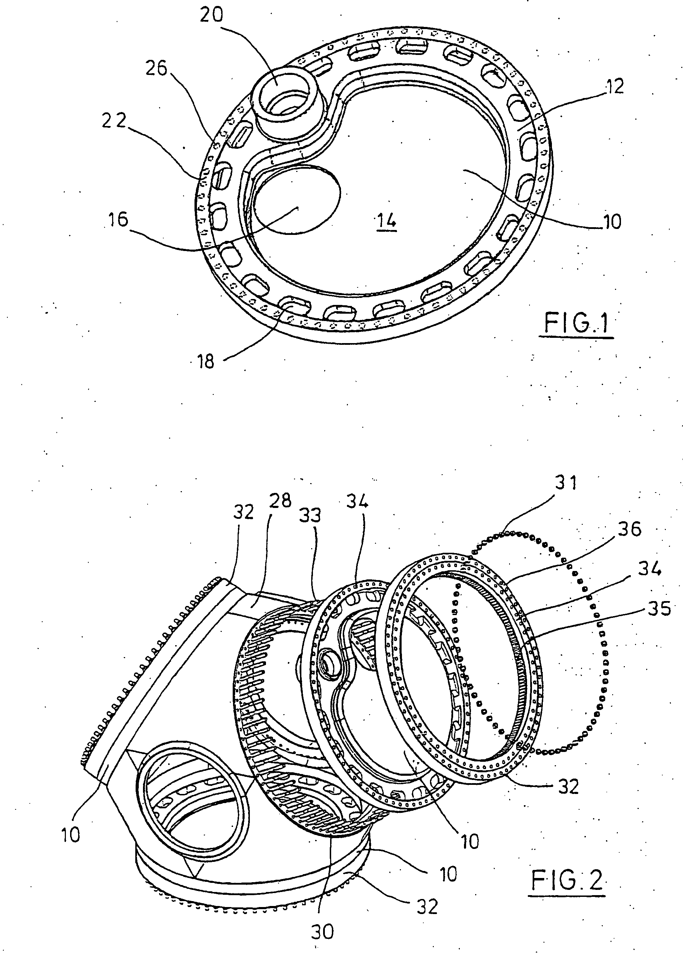

Fig. 1 zeigt ein Versteifungselement 10, das bevorzugt aus Stahl oder einem Gußmaterial hergestellt ist. Als Gußmaterial bietet sich Gußeisen mit Kugelgraphit an, beispielsweise entsprechend DIN 1563 (beispielsweise EN-GJS-400-18). Das Versteifungselement 10 ist in einem umlaufenden Rand 12 deutlich dicker ausgebildet als in seinem zentralen Bereich 14. Der zentrale Bereich 14 besitzt einen Durchstieg 16, der in das Rotorblatt führt. Der umlaufende Ring 12 ist mit langlochförmigen Durchbrechungen 18 versehen, die zur Montage der Rotorblattschrauben benötigt werden. In einem am Rand liegenden Bereich ist der umlaufende Ring 12 mit einem Befestigungsstutzen 20 zur Anbringung eines Pitchantriebs 38 versehen. In diesem Bereich ist der umlaufende Ring 12 in radialer Richtung breiter als im übrigen Bereich des Versteifungselements. Umlaufend ist das Versteifungselement 10 in seinen Flachseiten jeweils mit außen liegenden Flanschflächen 22, 24 versehen. In Fig. 1 ist die Flanschfläche 22, die zum Rotornabengehäuse hinweist, dargestellt. In Fig. 2 ist die gegenüberliegende Flanschfläche 24 zu erkennen, die von dem Rotornabengehäuse fortweist. Das Versteifungselement 10 besitzt kreisförmig angeordnete Durchgangsbohrungen 26, durch die Befestigungsbolzen (nicht dargestellt) bei der Montage des Versteifungselements geführt sind.

Fig. 2 zeigt einen Rotornabengehäuse 28, das an seinen drei Ansätzen für die Rotorblätter jeweils mit einem Versteifungselement 10 ausgestattet ist. Die Ansätze des Rotornabengehäuses 28 besitzen jeweils zur Anbringung des Versteifungselements und der Pitchdrehverbindung einen Montageflansch 30, aus dem Befestigungsbolzen 33 vorstehen.

Fig. 2 zeigt ferner die Pitchdrehverbindung 32, die aus einem drehbaren Lager mit einem Innenring 34 und einem Außenring 36 besteht. Innenring 34 und Außenring 36 sind jeweils mit kreisförmig angeordneten Durchgangsbohrungen versehen. Die Durchgangsbohrungen des Außenkranzes entsprechen den Durchgangsbohrungen 26 des Versteifungselements. Die oben erwähnten Befestigungsbolzen 33 an dem Montageflansch 30 reichen durch das Versteifungselement 10 und durch den Außenring 36 der Pitchdrehverbindung 32 hindurch. Das Versteifungselement 10 und die Pitchdrehverbindung 32 sind über Muttern 31 an den Befestigungsbolzen gesichert. Der Innenring 34 der Pitchdrehverbindung 32 ist ebenfalls mit kreisförmig angeordneten Durchgangsbohrungen versehen. Der Innenring 34 besitzt auf seiner Innenseite eine Verzahnung 35, über die mit Hilfe eines Pitchantriebs der Innenring 34 relativ zum Außenring 36 gedreht und damit die Winkelstellung des Rotorblatts eingestellt werden kann. Das Versteifungselement 10 und insbesondere dessen umlaufender Ring 12 sind dabei so ausgebildet, daß diese mit dem Innenring nicht in Berührung kommen.

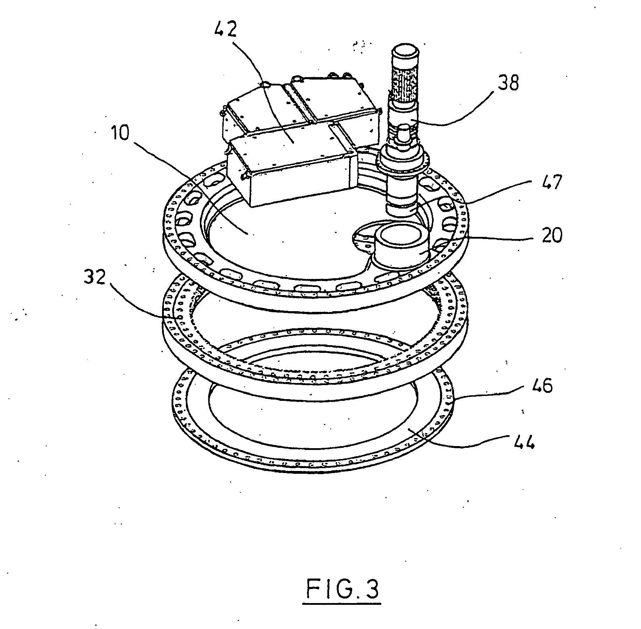

Fig. 3 zeigt das Versteifungselement 10 in seiner Funktion als Trägerelement für Komponenten 38, 42 des Pitchsystems. Der Pitchantrieb 38 des Pitchsystems ist an dem Befestigungsstutzen 20 befestigt und reicht durch das Versteifungselement 10 hindurch, um mit einem Ritzel 47 in der Verzahnung 35 des Innenrings der Pitchdrehverbindung 32 zu kämmen. Schaltschränke 42 für eine Energieversorgung und Steuerung, beispielsweise für einen Umrichter und für einen Akkumulator, sind in Fig. 3 lediglich schematisch dargestellt. Sowohl der Pitchantrieb als auch die Schaltschränke 42 sind an dem Versteifungselement 10 vormontiert und können unabhängig von dem Rotornabengehäuse getestet werden.

In Fig. 3 ist ein zweites Versteifungselement 44 zusätzlich dargestellt. Das Versteifungselement 44 entspricht mit seinen Durchgangsbohrungen 46 den Durchgangsbohrungen im Innenring der Pitchdrehverbindung. Das Versteifungselement 44 wird zwischen Pitchdrehverbindung und Blattwurzel des Rotorblatts (nicht dargestellt) verschraubt.

Das erfindungsgemäße Versteifungselement 10 bietet eine Reihe von Vorteilen. So ist der gießtechnische Aufwand bei der Herstellung des Rotornabengehäuses 28 deutlich vermindert, da die Versteifungselemente 10 und das Rotornabengehäuse 28 separat voneinander gegossen werden. Dadurch reduzieren sich die Herstellungskosten und die Gußqualität wird verbessert. Durch die Montage von Komponenten des Pitchsystems auf dem Versteifungselement 10 werden zusätzliche Trägerkonstruktionen, die bisher zur Montage der Komponenten vorgesehen werden mußten, vermieden. Auch die Montage wird vereinfacht, da bei der Montage des Versteifungselements 10 auch direkt die Komponenten des Pitchsystems montiert werden.

Das rotorblattseitige Versteifungselement 44 ist so ausgebildet, daß es zusammen mit der Rotorblattwurzel (nicht dargestellt) eine annähernd gleiche Steifigkeit wie das Rotornabengehäuse 28 und das rotornabenseitige Versteifungselement 10 besitzt, wodurch sich an den Anschlüssen von Innen- und Außenring ähnliche Steifigkeitsverhältnisse ergeben. Durch dieses Zusammenwirken der Versteifungselemente werden die auf die Pitchdrehverbindung 32 einwirkenden Belastungen minimiert und deren Lebensdauer erhöht.

## Patentansprüche

1. Windenergieanlage mit einem Rotomabengchäuse (28), das über Verbindungsmittel mit mindestens einer Pitchdrehverbindung (32) verbindbar ist, und mit mindestens einem Rotorblatt, dessen Blattwurzel mit der Pitchdrehverbindung (32) verbunden ist, wobei die Pitchdrehverbindung aus einem drehbaren Lager mit einem Innenring (34) und einem Außenring (36) besteht,
wobei ein rotornabenseitiges Versteifungselement (10) vorgesehen ist, das zwischen der Pitchdrehverbindung (32) und dem Rotornabengehäusc (28) befestigt ist.
**dadurch gekennzeichnet, dass**
ein zusätzliches Versteifungselement (44) rotorblattseitig von der Pitchdrehverbindung (32) an dem Rotorblatt vorgesehen ist.

2. Windenergieanlage nach Anspruch 1, **dadurch gekennzeichnet, daß** das rotornabenseitige Versteifungselement (10) kreisförmig angeordnete Durchgangsbohrungen (26) aufweist.

3. Windenergieanlage nach Anspruch 1 oder 2, **dadurch gekennzeichnet, daß** zur Verbindung von rotornabenseitigem Versteifungselement (10) und Pitchdrehverbindung (32) an dem Rotornabengehäuse (28) dieselben Verbindungsmittel vorgesehen sind.

4. Windenergieanlage nach einem der Ansprüche 1 bis 3, **dadurch gekennzeichnet, daß** als Verbindungsmittel Schrauben (33) vorgesehen sind.

5. Windenergieanlage nach einem der Ansprüche 1 bis 4, **dadurch gekennzeichnet, daß** das rotornabenseitige Versteifungselement (10) Komponenten (38, 42) der Pitchdrehverbindung (32) trägt.

6. Windenergieanlage nach einem der Ansprüche 1 bis 5, **dadurch gekennzeichnet, daß** das rotornabenseitige Versteifungselement (10) die Form eines Rings aufweist.

7. Windenergicanlage nach einem der Ansprüche 1 bis 5, **dadurch gekennzeichnet, daß** das rotornabenseitige Versteifungselement (10) die Form einer Platte, Scheibe oder Wanne aufweist.

8. Windenergieanlage nach Anspruch 7, **dadurch gekennzeichnet, daß** das Versteifungselement (10) eine oder mehrere Durchbrechungen (16) aufweist.

9. Windenergieanlage nach Anspruch 8, **dadurch gekennzeichnet, daß** die oder eine der Durchbrechungen (16) als Mannloch ausgebildet ist.

10. Windenergieanlage nach einem der Ansprüche 1 bis 9, **dadurch gekennzeichnet, daß** das rotornabenseitige Versteifungselement (10) aus Metall hergestellt ist.

11. Windenergieanlage nach einem der Ansprüche 1 bis 10, dadurch gekennzcichnet, daß die Verbindung von Rotornabengehäuse (28) und rotornabenseitigem Versteifungselement (10) und das an der Pitchdrehverbindung (32) befestigte Rotorblatt im Bereich seiner Blattwurxel annähernd gleiche Steifigkeit besitzen.

12. Windencrgieanlage nach Anspruch 1, **dadurch gekennzeichnet, daß** die Pitchdrehverbindung (32) rotorblattseitig und rotornabenseitig jeweils mit einem Flansch verbunden ist, die beide annähernd die gleiche Steifigkeit besitzen.

13. Windenergieanlage nach einem der Ansprüche 1 bis 12, **dadurch gekennzeichnet, daß** das rotornabenseitige Versteifungselement (10) Durchbrechungen (18) für die Montage der Verbindungsmittel zwischen der Pitchdrehverbindung (32) und einem Rotorblatt der Windenergieanlage aufweist.

## Claims

1. A wind turbine comprising a rotor hub housing (28) connectable to at least one pitch bearing (32) via joining means, and with at least one rotor blade, the blade root of which is connected to the pitch bearing (32), wherein the pitch bearing (32) is realised as a rotable bearing comprising an inner ring (34) and an outer ring (36),
wherein a rotor hub sided stiffening element (10) is provided, which is fastened between the pitch bearing (32) and the rotor hub housing (28),
**characterised in that**
an additional stiffening element (44) is provided at the rotor blade on the rotor blade side of the pitch bearing (32).

2. A wind turbine according to claim 1, **characterised in that** the rotor hub sided stiffening element (10) has circularly arranged through-bores (26).

3. A wind turbine according to claim 1 or 2, **characterised in that** for the connection of the rotor hub sided stiffening element (10) and the pitch bearing (32) on the rotor hub housing (28), the same joining means are provided.

4. A wind turbine according to any one of claims 1 to 3, **characterised in that** screws (33) are provided as joining means.

5. A wind turbine according to any one of claims 1 to 4, **characterised in that** the rotor hub sided stiffening element (10) carries components (38, 42) of the pitch bearing (32).

6. A wind turbine according to any one of claims 1 to 5, **characterised in that** the rotor hub sided stiffening element (10) has the shape of a ring.

7. A wind turbine according to any one of claims 1 to 5, **characterised in that** the rotor hub sided stiffening element (10) has the form of a plate, disc or vat.

8. A wind turbine according to claim 7, **characterised in that** the rotor hub sided stiffening element (10) has one or several openings (16),

9. A wind turbine according to claim 8, **characterised in that** the one or one of the openitig(s) (16) is realised as a manhole.

10. A wind turbine according to any one of claims 1 to 9, **characterised in that** the rotor hub sided stiffening element (10) is made from metal.

11. A wind turbine according to any one of claims 1 to 10, **characterised in that** the junction of the rotor hub housing (28) and the rotor hub sided stiffening element (10) and the rotor blade fixed to the pitch bearing (32) in the region of its blade root have approximately the same stiffness.

12. A wind turbine according to claim 1, **characterised in that** the pitch bearing (32) is connected to a flange at its rotor blade side and at its rotor hub side each at a time, both flanges having approximately the same stiffness.

13. A wind turbine according to any one of claims 1 to 12, **characterised in that** the rotor hub sided stiffening element (10) has openings (18) for the installation of the joining means between the pitch bearing (32) and the rotor blade of the wind turbine.

## Revendications

1. éolienne comprenant un logement de moyeu de rotor (28) qui peut être connecté par le biais de moyens de connexion à au moins une connexion rotative de pitch (32), et comprenant au moins une pale de rotor dont la racine de pale est reliée à la connexion rotative de pitch (32), dans laquelle la connexion rotative de pitch (32) se compose d'un palier rotatif avec un anneau interne (34) et un anneau externe (36),
dans laquelle un élément de renforcement (10) côté moyeu de rotor qui est fixé entre la connexion rotative de pitch (32) et le logement de moyeu de rotor (28) est prévu,
**caractérisée en ce que**
un élément de renforcement supplémentaire (44) est prévu sur la pale de rotor du côté de la pale de rotor de la connexion rotative de pitch (32).

2. Eolienne selon la revendication 1, **caractérisée en ce que** l'élément de renforcement (10) côté moyeu de rotor présente des mésanges de passage (26) disposés en cercle.

3. Eolienne selon la revendication 1 ou 2, **caractérisée en ce que** les mêmes moyens de connexion sont prévus pour la connexion de l'élément de renfoncement (10) côté moyeu de rotor et de la connexion rotative de pitch (32) au logement de moyeu de rotor (28).

4. Eolienne selon l'une quelconque des revendications 1 à 3, **caractérisée en ce que** des vis (33) sont prévues en tant que moyens de connexion.

5. Eolienne selon l'une quelconque des revendications 1 à 4, **caractérisée en ce que** l'élément de renforcement (10) côté moyeu de rotor porte des composants (38, 42) de la connexion rotative de pitch (32).

6. Eolienne selon l'une quelconque des revendications 1 à 5, **caractérisée en ce que** l'élément de renforcement (10) côté moyeu de rotor présente la forme d'un anneau.

7. Eolienne selon l'une quelconque des revendications 1 à 5, **caractérisée en ce que** l'élément de renforcement (10) côté moyeu de rotor présente la forme d'une plaque, d'un disque ou d'une cuve.

8. Eolienne selon la revendication 7, **caractérisée en ce que** l'élément de renforcement (10) côté moyeu de rotor présente un ou plusieurs orifices traversants (16).

9. Eolienne selon la revendication 8, **caractérisée en ce que** les ou un des orifices traversants (16) est réalisé en tant que trou d'homme.

10. Eolienne selon l'une quelconque des revendications 1 à 9, **caractérisée en ce que** l'élément de renforcement (10) côté moyeu de rotor est fabriqué en métal.

11. Eolienne selon l'une quelconque des revendications 1 à 10, **caractérisée en ce que** la connexion du logement de moyeu de rotor (28) et de l'élément de renforcement (10) côté moyeu de rotor et la pale de rotor fixée à la connexion rotative de pitch (32) dans la région de sa racine de pale possèdent à peu près la même rigidité.

12. Eolienne selon la revendication 1, **caractérisée en ce que** la connexion rotative de pitch (32) est reliée du côté de la pale de rotor et du côté du moyeu de rotor à chaque fois à une bride qui possède chacune à peu près la même rigidité.

13. Eolienne selon l'une quelconque des revendications 1 à 12, **caractérisée en ce que** l'élément de renforcement (10) côté moyeu de rotor présente des orifices traversants (18) pour le montage des moyens de connexion entre la connexion rotative de pitch (32) et une pale de rotor de l'éolienne.
